# EUROPÄISCHE PATENTSCHRIFT

(11) **EP 2 673 146 B1**
(45) Veröffentlichungstag und Bekanntmachung des Hinweises auf die Patenterteilung: **10.07.2019**
(21) Anmeldenummer: 12701746.5
(22) Anmeldetag: 30.01.2012
(51) Int. Cl.: B60C 11/16

(54) **SPIKE UND FAHRZEUGLUFTREIFEN MIT SPIKES**
STUD AND TIRE WITH STUDS
CLOU ANTIDÉRAPANT ET PNEU AVEC CLOUS ANTIDÉRAPANTS

(30) Priorität: 08.02.2011 DE 102011000563
(43) Veröffentlichungstag der Anmeldung: 18.12.2013
(73) Patentinhaber: Continental Reifen Deutschland GmbH, 30165 Hannover (DE)
(72) Erfinder: SCHLITTENHARD, Jan, 30900 Wedemark (DE)
(74) Vertreter: Preusser, Andrea
(86) Internationale Anmeldenummer: PCT/EP2012/051399
(87) Internationale Veröffentlichungsnummer: WO 2012/107305

(56) Entgegenhaltungen:
- EP-A1- 1 055 509
- WO-A1-02/32696
- WO-A1-02/070287
- WO-A1-2010/007294
- WO-A1-2011/036050
- FR-A- 1 403 818
- FR-A1- 2 182 750
- FR-A1- 2 775 934

## Beschreibung

Die Erfindung betrifft einen Spike zum Einsetzen in ein Spikeloch im Laufstreifen eines Fahrzeugluftreifens mit einem im Spikeloch gehaltenen Spikekörper und mit einem Spikepin, welcher jener Teil des Spikes ist, welcher über die Laufstreifenoberfläche vorsteht, wobei der Spikekörper aus einem Oberflansch, einem Fußflansch und einem den Oberflansch mit dem Fußflansch verbindenden Mittelteil, welcher tailliert ist und eine doppelkonusartige oder doppelkonusähnliche Außenkontur aufweist, besteht, wobei der Mittelteil oberhalb seiner Taille einen Oberteil aufweist, welcher sich Richtung Oberflansch auf dessen Durchmesser verbreitert, und unterhalb der Taille einen Unterteil aufweist, dessen Außenkontur konkav gerundet ist und welcher sich Richtung Fußflansch verbreitert. Die Erfindung betrifft ferner einen Fahrzeugluftreifen mit Spikes.

Derartige Spikes sind beispielsweise aus der FR 2 182 750 A1 und der FR 2 775 934 A1 bekannt. Spikes mit Mittelteilen, deren Durchmesser geringer ist als der Durchmesser des Oberflansches und/oder des Fußflansches, sind beispielsweise aus der WO 02/32696 A1, der WO 02/070287 A1, der FR 1 403 818 A1 und der WO 2010/007294 A1 bekannt.

Der aus der EP 1 055 509 A1 bekannte Spike weist einen die Höhenerstreckung des Spikes dominierenden, weitgehend zylindrischen Mittelteil auf, der keine Taillierung besitzt und im Vergleich zum Oberflansch eine sehr große Erstreckung bzw. Länge aufweist. Der Übergangsbereich zum Oberflansch ist kurz, ca. 15 % der Höhe des Spikekörpers. Dieser Spike ist ein spezieller Spike, welcher mit einem Teil des Spikekörpers und nicht nur mit dem Spikepin über die Laufstreifenoberfläche übersteht. Reifen mit solchen Spikes besitzen keine Straßenzulassung und können allenfalls in Reifen verwendet werden, die auf Fahrzeugen für spezielle Einsatzzwecke, beispielweise im Automobilsport, verwendet werden. Darüber hinaus befasst sich dieses Dokument damit, die Spikes bereits bei der Vulkanisation des Fahrzeugluftreifens einzubinden, indem die Spikes in Vertiefungen der Vulkanisationsform vor dem Einbringen des Rohreifens in der Form positioniert werden. Der Spike gemäß der EP 1 055 509 A1 ist daher auch speziell für diesen Zweck ausgestaltet.

Spikes werden üblicherweise durch eine Kombination aus Formschluss und Klemmung in den Spikelöchern des Laufstreifens am Fahrzeugluftreifen gehalten und weisen einen Spikekörper, insbesondere aus Aluminium, Stahl oder Kunststoff, auf, in welchem der über die Laufstreifenoberfläche vorstehende Spikepin, welcher insbesondere aus Hartmetall besteht, gehalten ist. Rotationssymmetrisch gestaltete Spikes weisen üblicherweise einen im Wesentlichen zylindrischen Oberflansch, einen scheibenförmigen Fußflansch und einen ebenfalls zylindrischen Mittelteil auf. Bei Spikes mit in Draufsicht länglich ausgeführten Spikekörpern weisen der Mittelteil und der Oberflansch über ihre Höhenerstreckung eine im Wesentlichen gleichbleibende Breite und Länge auf. Die Übergangsbereiche vom Mittelteil zum Fußflansch und vom Mitteilteil zum Oberflansch sind kurz gehalten und mit sehr kleinen Radien gerundet. Vor allem der Mittelteil der Spikekörper bekannter Spikes bildet eine Zone geringen Anpressdruckes durch die umgebende Gummimatrix. In den Übergangszonen zu den beiden Flanschen stellt sich ein großer Druckgradient zur umgebenden Gummimatrix ein. Diese Druckverhältnisse durch die Gummimatrix sind sehr nachteilig für Spikes, die mittels eines Haftsystems im Laufstreifen eingebunden werden sollen. Bei dieser Art der Verankerung der Spikes werden diese vor dem Einsetzen in die Spikelöcher mit einem Gummihaftsystem beschichtet, unter Pressung des Gummimaterials in die Spikelöcher eingebracht und anschließend wird das Haftsystem bei in den Spikelöchern positionierten Spikes durch Wärme aktiviert. Damit wird eine chemische Haftverbindung der Spikes zum Gummimaterial des Laufstreifens hergestellt. Die oben erwähnten Übergangszonen mit großen Druckgradienten und die im Mittelteil gebildeten Zone mit geringem Druck durch die Gummimatrix haben nun bei herkömmlich ausgeführten Spikes zur Folge, dass nur eine sehr schlechte Anbindung des Haftsystems zur Gummimatrix in diesen Bereichen möglich ist.

Der Erfindung liegt somit die Aufgabe zugrunde, die Spikegeometrie derart auszuführen, dass die Normalkraft der umgebenden Gummimatrix bei eingesetzten Spikes auf die Spikeoberfläche vergleichmäßigt wird, um eine Verbesserung der Haftverbindung von mit einem Haftsystem beschichteten Spikes zum Gummimaterial des Laufstreifens zu erzielen.

Gelöst wird die gestellte Aufgabe erfindungsgemäß dadurch, dass der Oberflansch eine Höhe von 25% bis 45 % der Höhe des Spikekörpers aufweist, wobei die Höhe des Oberteils des Mittelteils zwischen 20 % und 48 % der Höhe des Spikekörpers beträgt.

Durch eine derart taillierte Ausführung des Mittelteils weist dieser zum Oberflansch und zum Fußflansch Übergangsbereiche auf, die eine gute Anbindung und damit eine gute Haftverbindung der Spikes zum Gummimaterial des Laufstreifens ermöglichen. Damit werden die Haltekräfte des Spikes im Laufstreifen erhöht somit ein Verlust des Spikes während des Reifenlebens wirkungsvoll verhindert.

Der Mittelteil des Spikekörpers zwischen Oberflansch und Fußflansch kann im Rahmen der Erfindung auf unterschiedliche Weise gestaltet werden, um eine gute Einbindung der Spikes zum Gummimaterial des Laufstreifens zu gewährleisten.

Bei einer dieser Ausführungsvarianten ist der Oberteil mit einer konkav gekrümmten Außenfläche versehen ist. Die gekrümmte Außenfläche ist vorzugsweise derart gestaltet, dass der Oberteil des Mittelteils im Wesentlichen einem Kreisbogen - bei rotationssymmetrischer Ausführung des Spikekörpers - oder mehreren Kreisbögen - bei nicht rotationssymmetrischer Ausführung des Spikekörpers - folgt, wobei der Radius des Kreisbogens bzw. der Kreisbögen zwischen 2 mm und 5 mm, insbesondere zwischen 2,7 mm und 3,5 mm, beträgt. Bei einer rotationssymmetrischen Ausführung des Spikekörpers bzw. Mittelteils ist dieser Kreisbogenradius über den gesamten Umfang des Mittelteils gleich groß, bei einer nicht rotationssymmetrischen Ausführung des Spikekörpers bzw. Mittelteils kann dieser Radius, wie erwähnt, über den Umfang des Mittelteils variieren.

Auch die Dimensionierung des Mittelteils, insbesondere dessen Höhenerstreckung, ist für eine gute Anbindung des Spikekörpers an das Gummimaterial des Laufstreifens von Bedeutung. Die Höhe des Oberteils des Mittelteils sollte insbesondere zwischen 20% und 35% der Höhe des Spikekörpers betragen.

Die Außenkontur des Unterteils des Mittelteils folgt einem Kreisbogen - bei einer rotationssymmetrischen Ausführung des Spikekörpers bzw. Mittelteils - oder mehreren Kreisbögen - bei einer nicht rotationssymmetrischen Ausführung des Spikekörpers bzw. Mitteilteils -, wobei der Radius des Kreisbogens bzw. der Kreisbögen zwischen 0,8 mm und 1,9 mm, insbesondere zwischen 1 mm und 1,2 mm, beträgt.

Die Taillierung des Mittelteils ist für die Vergleichmäßigung der Normalkraft der den Spikekörper umgebenden Gummimatrix von Bedeutung. Die Taillierung sollte jedoch nicht zu ausgeprägt sein, insbesondere ist es vorteilhaft, wenn der Durchmesser bzw. Länge und Breite des Mittelteils an der Taille 4 mm bis 5,3 mm beträgt.

Vor allem bei Spikekörpern mit einer nicht rotationssymmetrischen Geometrie ist es vorteilhaft, zwischen Mittelteil und Oberflansch einen Übergangsbereich mit einer konvex gerundeten Außenkontur vorzusehen. Diese konvex gerundete Außenkontur des Übergangsbereiches folgt gemäß einer bevorzugten Ausführungsform der Erfindung im Wesentlichen einem Kreisbogen oder mehreren Kreisbögen, je nachdem, ob der Spikekörper eine rotationssymmetrische oder eine nicht rotationssymmetrische Geometrie aufweist, wobei der Radius bzw. die Radien zwischen 1 mm und 2,5 mm, insbesondere zwischen 1,2 mm und 2 mm, beträgt bzw. betragen.

Die Höhe des Übergangsbereiches kann klein gehalten werden, insbesondere zwischen 15% und 30% der Höhe des Oberflansches.

Die Erfindung betrifft ferner einen Fahrzeugluftreifen mit einem Laufstreifen, in welchem erfindungsgemäß ausgeführte Spikes verankert sind. Somit weisen Fahrzeugluftreifen gemäß der Erfindung Spikes mit hohen Haltekräften auf, sodass ein Verlust der Spikes während des gesamten Reifenlebens wirkungsvoll vermieden wird.

Weitere Merkmale, Vorteile und Einzelheiten der Erfindung werden nun anhand der Zeichnung, die Ausführungsbeispiele darstellt, näher beschrieben. Dabei zeigen,
Fig. 1 bis Fig. 4 Ansichten eines rotationssymmetrischen Spikes,
Fig. 1 eine Schrägansicht,
Fig. 2 in Draufsicht,
Fig. 3 eine Ansicht von unten und
Fig. 4 eine Seitenansicht,
Fig. 5 bis Fig. 8 eine Ausführungsform eines nicht rotationssymmetrisch ausgeführten Spikes,

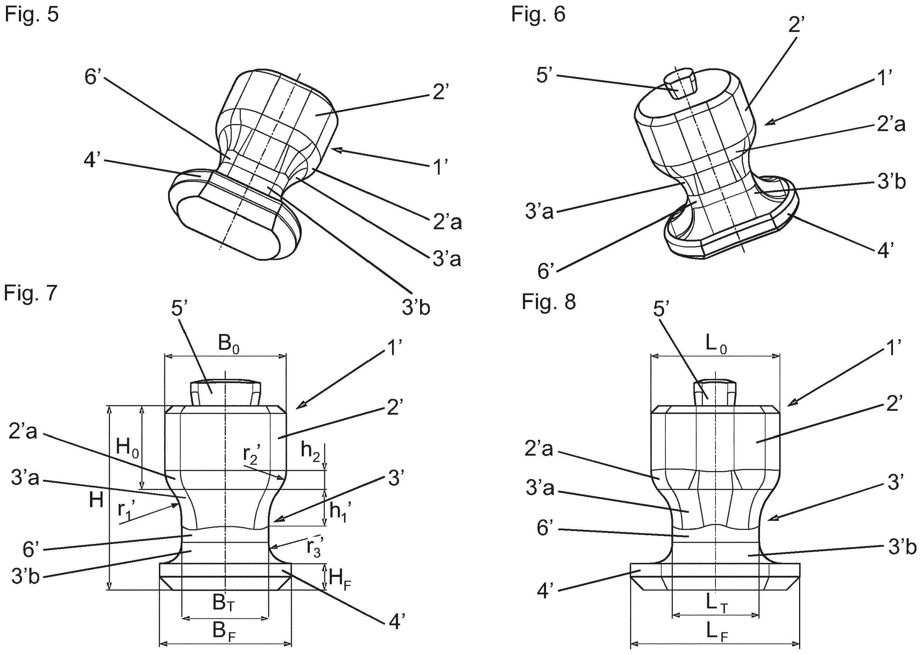

Fig. 5 eine Schrägansicht von unten,
Fig. 6 eine Schrägansicht von oben,
Fig. 7 eine Ansicht der schmäleren Seite und
Fig. 8 eine Ansicht der längeren Seite.

Gemäß der Erfindung ausgeführte Spikes sind für Fahrzeugluftreifen vorgesehen, die für den Straßenverkehr zugelassen sind, insbesondere Reifen für Personenkraftwagen, und sind allem für eine nachträgliche Einheizung im Laufstreifen von Fahrzeugluftreifen geeignet. Der Spikepin ist jener Teil des Spikes, welcher über die Laufstreifenoberfläche vorsteht.

In der Beschreibung und den Figuren bezeichnen "Höhen" Abmessungen in der Einbaurichtung der Spikes, "Breiten" und "Längen" sind Abmessungen quer zur Einbaurichtung, "oben" ist dort, wo der Spikepin angeordnet ist.

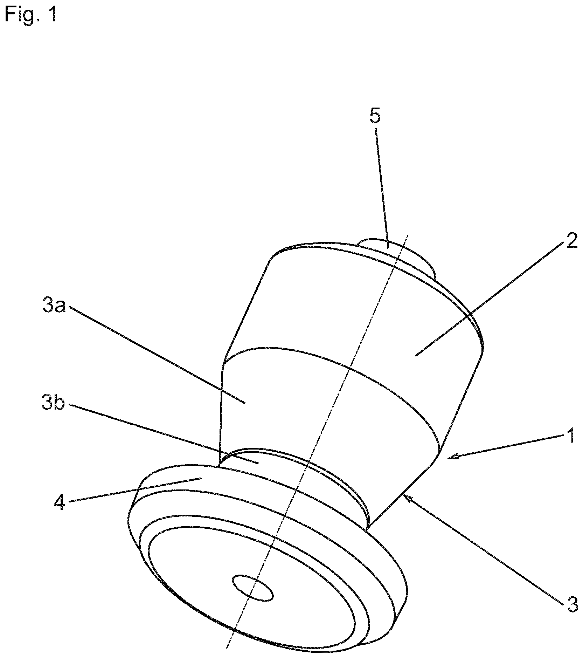

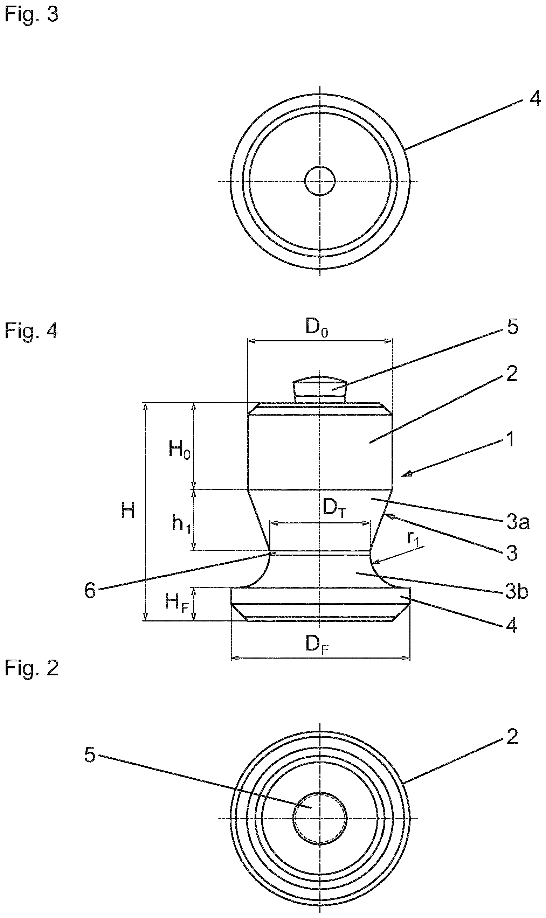

Fig. 1 bis Fig. 4 zeigen eine Ausführungsform eines erfindungsgemäß ausgeführten Spikes, welcher eine rotationssymmetrische Geometrie aufweist. Der Spike weist einen Spikekörper 1 mit einem Oberflansch 2, einem Mittelteil 3 und einem Fußflansch 4 auf. Im Oberflansch 2 ist der Spikepin 5 verankert. Der Oberflansch 2 und Fußflansch 4 sind im Wesentlichen zylindrische Elemente. Der den Oberflansch 2 mit dem Fußflansch 4 verbindende Mittelteil 3 ist doppeltkonusartig tailliert gestaltet und weist dabei einen Oberteil 3a und einen Unterteil 3b auf, wobei der Oberteil 3a und der Unterteil 3b an der Stelle mit dem geringsten Durchmesser D_{T}, der Taille 6, zusammentreffen. Die Taille 6 erstreckt sich aus fertigungstechnischen Gründen über einen sehr kleine und in den Figuren nicht gekennzeichnete Höhe. In Fig. 4 ist mit H die Höhe des Spikekörpers 1 bezeichnet, mit D_{O} der Durchmesser und mit H_{O} die Höhe des Oberflansches 2, mit D_{F} der Durchmesser und mit H_{F} die Höhe des Fußflansches 4. Der Oberteil 3a des Mittelsteils 3 verläuft in Richtung Taille 6 konisch und weist eine Höhe h₁ auf. Der Unterteil 3b verbreitet sich über eine in Richtung Fußflansch 4 konkav gerundete Außenfläche, insbesondere über einen Kreisbogen mit einem Radius r₁. Der Radius r₁ beträgt zwischen 0,8 mm und 1,9 mm, insbesondere zwischen 1 mm und 1,2 mm. Typische Abmessungen des erfindungsgemäßen Spikekörpers 1 sind:
Spikekörperhöhe H: 8 mm bis 12 mm,
Höhe H_{O} des Oberflansches 2: 25 % bis 60 %, insbesondere 30 % bis 45 %, der Spikekörperhöhe H,
Durchmesser D_{O} des Oberflansches 2: 5,5 mm bis 8 mm,
Durchmesser D_{F} des Fußflansches 4: 6,5 mm bis 10 mm, insbesondere 8 mm bis 9 mm,
Höhe H_{F} des Fußflansches 4: 1 mm bis 2 mm,
Höhe h₁ des Oberteils 3a: 15 % bis 48 %, insbesondere 20 % bis 35 % der Spikekörperhöhe H,
Taillendurchmesser D_{T}: 4 mm bis 5,3 mm, insbesondere 4,5 mm bis 5 mm.

Wie dargestellt, können der Oberflansch 2 und der Fußflansch 4 Endabschnitte aufweisen, die durch eine umlaufende "Anfasung" einen geringeren Durchmesser aufweisen.

Fig. 5 bis Fig. 8 zeigen eine zweite Ausführungsform der Erfindung. Wie insbesondere Fig. 5 und Fig. 6 zeigen, ist der mit einem Spikepin 5' versehene Spikekörper 1', welcher ebenfalls einen Oberflansch 2', einen Mittelteil 3' und einen Fußflansch 4' aufweist, länglich jedoch abgerundet gestaltet und weist eine Höhe H auf. Der Oberflansch 2', der Mittelteil 3' und der Fußflansch 4' weisen unterschiedliche Längen- und Breitenabmessungen auf. Der Oberflansch 2' weist eine Höhe H_{O}, eine Länge L_{O} und eine Breite B_{O}, der Fußflansch 4' eine Höhe H_{F}, eine Länge L_{F} und eine Breite B_{F} auf. Der Mittelteil 3' ist tailliert, die Taille 6' besitzt eine Breite B_{T} und eine Länge L_{T} und kann sich dabei über eine gewisse Höhe von bis zu 1,5 mm im Mittelteil 3' erstrecken. Der Mittelteil 3' besteht aus einem Oberteil 3'a, welcher einen Höhenerstreckung h₁' aufweist, und einem Unterteil 3'b.

Typische Abmessungen des Spikekörpers 1' sind:
Spikekörperhöhe H: 8 mm bis 12 mm,
Höhe H_{O} des Oberflansches 2': 25 % bis 60 %, insbesondere 30 % bis 45 %, der Spikekörperhöhe H,
Länge L_{O} des Oberflansches 2': 5,5 mm bis 8 mm, insbesondere 6,3 mm bis 7,5 mm,
Breite B_{O} des Oberflansches 2': 5,5 mm bis 7,8 mm, insbesondere 6,2 mm bis 6,7 mm,
Länge L_{F} des Fußflansches 4': 7,5 mm bis 9 mm,
Breite B_{F} des Fußflansches 4': 6 mm bis 8 mm,
Breite B_{T} der Taille 6': 4 mm bis 5,3 mm,
Länge L_{T} der Taille 6': 4 mm bis 5,3 mm,
Höhe H_{F} des Fußflansches 4': 1 mm bis 2 mm,
Höhe h₁' des Oberteils 3'a: 15 % bis 48 %, insbesondere 20 % bis 35 % der Spikekörperhöhe H.

In Folge der länglichen Ausführung des Spikekörpers 1' werden der Oberteil 3'a zwischen der Taille 6' und dem Oberflansch 2' und ein Übergangsbereich 2'a am Oberflansch 2' gerundet ausgeführt. Die Rundung im Übergangsbereich 2'a ist konvex, jene im Oberteil 3'a konkav. Die Rundungen sind insbesondere Kreisbögen, wobei der Radius r₂' im Übergangsbereich zwischen 1 mm und 2,5 mm, insbesondere zwischen 1,2 mm und 2 mm beträgt. Der Radius r₁' des Oberteils 3'a beträgt zwischen 2 mm und 5 mm, insbesondere zwischen 2,7 mm und 3,5 mm. Der Übergangsbereich 2'a mit dem Radius r₂' erstreckt sich über eine Höhe h₂, welche zwischen 15 % und 30 % , insbesondere etwa 25 %, der Höhe H_{O} des Oberflansches 2' beträgt. Der Unterteil 3'b des Mittelteils 3' ist zwischen der Taille 6' und dem Fußflansch 4' ebenfalls konkav gerundet, insbesondere entlang von Kreisbögen mit einem Radius r₃', welcher zwischen 0,8 mm und 1, 9 mm, insbesondere zwischen 0,95 mm und 1,2 mm, beträgt.

Der Spikepin 5' kann, wie dargestellt, ebenfalls eine längliche Form aufweisen, er kann jedoch auch rotationssymmetrisch, demnach in Draufsicht kreisrund, ausgeführt sein.

Bei einer nicht gezeigten Ausführungsform der Erfindung ist der Spikekörper zwar nicht rotationssymmetrisch gestaltet aber mit "Längen-und Breitenabmessungen" versehen, die im Wesentlichen gleich groß sind und sich in den zum Spikekörper 2' angegebenen Werten bewegen.

Erfindungsgemäß ausgeführte Spikes können ferner unabhängig davon, ob sie rotationsymmetrisch oder nicht rotationsymmetrisch ausgeführt sind mit gerundeten Mittelteil-Oberteilen und gerundeten Übergangsbereiche zum Oberflansch versehen sein. Bezüglich der Radien und sonstigen Dimensionen gilt Analoges wie oben ausgeführt.

Die Geometrie bzw. Außenkontur des Mittelteils eines erfindungsgemäß ausgeführten Spikes ist somit derart, dass die Gummimatrix des in den Laufstreifen eingesetzten Spikes auf die Spikeoberfläche eine Normalkraft ausübt, die wesentlich gleichmäßiger ist als die bei herkömmlichen Spikes. Durch die erfindungsgemäße Geometrie bzw. Außenkontur wird daher die für eine gute Haftung der Spikes im Gummi wichtige Geometrie optimiert. Wie bereits oben erwähnt, sind erfindungsgemäß ausgeführte Spikes vor allem dafür vorgesehen und geeignet, mittels eines Haftsystems im Laufstreifengummi gehalten zu werden. Dazu werden die Spikes vor dem Einbringen in den Laufstreifen mit einem Haftsystem beschichtet und unter Pressung des Gummimaterials in die Spikelöcher eingebracht. Anschließend wird das Haftsystem bei in den Spikelöchern positionierten Spikes durch Zufuhr von Wärme aktiviert, und derart eine Haftverbindung der Spikes zum Gummimaterial des Laufstreifens hergestellt. Die Spikes sind daher sowohl chemisch als auch physikalisch in den Laufstreifen eingebunden und somit in der Lage, sehr hohen äußeren Belastungen standzuhalten.

### Bezugszeichenliste

- 1, 1': Spikekörper
- 2, 2': Oberflansch
- 2'a: Übergangsbereich
- 3, 3': Mittelteil
- 3a, 3'a: Oberteil
- 3b, 3'b: Unterteil
- 4, 4': Fußflansch
- 5, 5': Spikepin
- 6, 6': Taille
- H: Höhe des Spikekörpers
- D_{O}: Durchmesser des Oberflansches
- D_{F}: Durchmesser des Fußflansches
- H_{O}: Höhe des Oberflansches
- H_{F}: Höhe des Fußflansches
- h₁: Höhe des Unterteils
- h₂: Höhe des Übergangbereiches 2'a
- r₁, r₁': Radius
- r₂': Radius
- r₃': Radius
- L_{O}: Länge des Oberflansches 2'
- B_{O}: Breite des Oberflansches 2'
- L_{F}: Länge des Fußflansches 4'
- B_{F}: Breite des Fußflansches 4'
- B_{T}: Breite der Taille 6'
- L_{T}: Länge der Taille 6'
- D_{T}: Taillendurchmesser

## Patentansprüche

1. Spike zum Einsetzen in ein Spikeloch im Laufstreifen eines Fahrzeugluftreifens mit einem im Spikeloch gehaltenen Spikekörper (1, 1') und mit einem Spikepin, welcher jener Teil des Spikes ist, welcher über die Laufstreifenoberfläche vorsteht, wobei der Spikekörper aus einem Oberflansch (2, 2'), einem Fußflansch (4, 4') und einem den Oberflansch (2, 2') mit dem Fußflansch (4, 4') verbindenden Mittelteil (3, 3'), welcher tailliert ist und eine doppelkonusartige oder doppelkonusähnliche Außenkontur aufweist, besteht, wobei der Mittelteil (3, 3') oberhalb seiner Taille (6, 6') einen Oberteil (3a, 3'a) aufweist, welcher sich Richtung Oberflansch (2, 2') auf dessen Durchmesser verbreitert, und unterhalb der Taille (6, 6') einen Unterteil (3b, 3'b) aufweist, dessen Außenkontur konkav gerundet ist und welcher sich Richtung Fußflansch (4, 4') verbreitert,
**dadurch gekennzeichnet,**
**dass** der Oberflansch (2, 2') eine Höhe (H₀) von 25% bis 45 % der Höhe (H) des Spikekörpers aufweist, wobei die Höhe (h₁, h₁') des Oberteils (3a, 3'a) des Mittelteils (3, 3') zwischen 20 % und 48 % der Höhe (H) des Spikekörpers (1, 1') beträgt.

2. Spike nach Anspruch 1, **dadurch gekennzeichnet, dass** Oberteil (3'a) mit einer konkav gekrümmten Außenfläche versehen ist.

3. Spike nach Anspruch 1 oder 2, **dadurch gekennzeichnet, dass** die Außenkontur des Oberteils (3'a) des Mittelteils (3') im Wesentlichen einem Kreisbogen oder mehreren Kreisbögen folgt, dessen/deren Radius (r₁') zwischen 2 mm und 5 mm, insbesondere zwischen 2,7 mm und 3,5 mm beträgt.

4. Spike nach einem der Ansprüche 1 bis 3, **dadurch gekennzeichnet, dass** die Höhe (h₁, h₁') des Oberteils (3a, 3'a) des Mittelteils (3, 3') zwischen 20 % und 35 % der Höhe (H) des Spikekörpers (1, 1') beträgt.

5. Spike nach Anspruch 1, **dadurch gekennzeichnet, dass** die Außenkontur des Unterteils (3b, 3'b) des Mittelteils (3, 3') einem Kreisbogen oder mehreren Kreisbögen folgt, dessen/deren Radius (r₁, r₃') zwischen 0,8 mm und 1,9 mm, insbesondere zwischen 1 mm und 1,2 mm, beträgt.

6. Spike nach einem der Ansprüche 1 bis 5, **dadurch gekennzeichnet, dass** der Durchmesser (D_{T}) bzw. die Länge (L_{T}) und Breite (B_{T}) des Mittelteils (3, 3') an der Taille (6, 6') 4 mm bis 5,3 mm beträgt.

7. Spike nach einem der Ansprüche 1 bis 6, **dadurch gekennzeichnet, dass** am Oberflansch (2') ein Übergangsbereich (2'a) zum Oberteil (3'a) des Mittelteils (3') ausgebildet ist, welcher Übergangsbereich (2'a) eine konvex gerundete Außenkontur aufweist.

8. Spike nach Anspruch 7, **dadurch gekennzeichnet, dass** die konvex gerundete Außenkontur des Übergangsbereiches (2'a) im Wesentlichen einem oder mehreren Kreisbögen folgt, dessen/deren Radius (r₂') zwischen 1 mm und 2,5 mm, insbesondere zwischen 1,2 mm und 2 mm, beträgt.

9. Spike nach Anspruch 7 oder 8, **dadurch gekennzeichnet, dass** die Höhe (h₂) des Übergangbereiches (2'a) zwischen 15 % und 30 % der Höhe (Ho) des Oberflansches (2') beträgt.

10. Fahrzeugluftreifen mit einem Laufstreifen, in welchem Spikes gemäß einem oder mehreren der Ansprüche 1 bis 9 verankert sind.

## Claims

1. Stud for inserting into a stud hole in the tread of a pneumatic vehicle tyre, having a stud body (1, 1') held in the stud hole and having a stud pin, which is that part of the stud that protrudes from the tread surface, wherein the stud body consists of a top flange (2, 2'), a base flange (4, 4') and a middle part (3, 3') connecting the top flange (2, 2') to the base flange (4, 4'), said middle part (3, 3') being waisted and having a double-cone-type or double-cone-like outer contour, wherein the middle part (3, 3') has, above its waist (6, 6'), a top part (3a, 3'a), which widens in the direction of the top flange (2, 2') to the diameter of the latter, and has, beneath the waist (6, 6'), a bottom part (3b, 3'b), the outer contour of which is concavely rounded and which widens in the direction of the base flange (4, 4'),
**characterized**
**in that** the top flange (2, 2') has a height (H₀) of 25% to 45% of the height (H) of the stud body, wherein the height (h₁, h₁') of the top part (3a, 3'a) of the middle part (3, 3') is between 20% and 48% of the height (H) of the stud body (1, 1').

2. Stud according to Claim 1, **characterized in that** the top part (3'a) is provided with a concavely curved outer contour.

3. Stud according to Claim 1 or 2, **characterized in that** the outer contour of the top part (3'a) of the middle part (3') substantially follows a circular arc or several circular arcs, the radius/radii (r₁') of which is/are between 2 mm and 5 mm, in particular between 2.7 mm and 3.5 mm.

4. Stud according to one of Claims 1 to 3, **characterized in that** the height (h₁, h₁') of the top part (3a, 3'a) of the middle part (3, 3') is between 20% and 35% of the height (H) of the stud body (1, 1').

5. Stud according to Claim 1, **characterized in that** the outer contour of the bottom part (3b, 3'b) of the middle part (3, 3') follows a circular arc or several circular arcs, the radius/radii (r₁, r₃') of which is/are between 0.8 mm and 1.9 mm, in particular between 1 mm and 1.2 mm.

6. Stud according to one of Claims 1 to 5, **characterized in that** the diameter (D_{T}) or the length (L_{T}) and width (B_{T}) of the middle part (3, 3') is/are 4 mm to 5.3 mm at the waist (6, 6').

7. Stud according to one of Claims 1 to 6, **characterized in that**, at the top flange (2'), a transition region (2'a) to the top part (3'a) of the middle part (3') is formed, said transition region (2'a) having a convexly rounded outer contour.

8. Stud according to Claim 7, **characterized in that** the convexly rounded outer contour of the transition region (2'a) substantially follows one or more circular arcs, the radius/radii (r₂') of which is/are between 1 mm and 2.5 mm, in particular between 1.2 mm and 2 mm.

9. Stud according to Claim 7 or 8, **characterized in that** the height (h₂) of the transition region (2'a) is between 15% and 30% of the height (Ho) of the top flange (2').

10. Pneumatic vehicle tyre having a tread in which studs according to one or more of Claims 1 to 9 are anchored.

## Revendications

1. Crampon devant être inséré dans un trou à crampon dans la bande de roulement d'un pneumatique de véhicule, comprenant un corps de crampon (1, 1') retenu dans un trou à crampon et une pointe de crampon, qui est la partie du crampon qui fait saillie au-delà de la surface de la bande de roulement, le corps de crampon se composant d'une bride supérieure (2, 2'), d'une bride de base (4, 4') et d'une partie centrale (3, 3') reliant la bride supérieure (2, 2') et la bride de base (4, 4'), laquelle est amincie et présente un contour extérieur en forme de double cône ou similaire à un double cône, la partie centrale (3, 3') présentant au-dessus de sa partie amincie (6, 6') une partie supérieure (3a, 3'a) qui s'élargit dans la direction de la bride supérieure (2, 2') jusqu'à son diamètre et présentant en dessous de la partie amincie (6, 6') une partie inférieure (3b, 3'b) dont le contour extérieur est arrondi sous forme concave et s'élargit dans la direction de la bride de base (4, 4'),
**caractérisé en ce que**
la bride supérieure (2, 2') présente une hauteur (H₀) comprise entre 25 % et 45 % de la hauteur (H) du corps de crampon, la hauteur (h₁, h₁') de la partie supérieure (3a, 3'a) de la partie centrale (3, 3') étant comprise entre 20 % et 48 % de la hauteur (H) du corps de crampon (1, 1').

2. Crampon selon la revendication 1, **caractérisé en ce que** la partie supérieure (3'a) est pourvue d'une surface extérieure de courbure concave.

3. Crampon selon la revendication 1 ou 2, **caractérisé en ce que** le contour extérieur de la partie supérieure (3'a) de la partie centrale (3') suit essentiellement un arc de cercle ou plusieurs arcs de cercle dont le rayon (r₁') est compris entre 2 mm et 5 mm, en particulier entre 2,7 mm et 3,5 mm.

4. Crampon selon l'une quelconque des revendications 1 à 3, **caractérisé en ce que** la hauteur (h₁, h₁') de la partie supérieure (3a, 3'a) de la partie centrale (3, 3') est comprise entre 20 % et 35 % de la hauteur (H) du corps de crampon (1, 1').

5. Crampon selon la revendication 1, **caractérisé en ce que** le contour extérieur de la partie inférieure (3b, 3'b) de la partie centrale (3, 3') suit un arc de cercle ou plusieurs arcs de cercle dont le rayon (r₁, r₃') est compris entre 0,8 mm et 1,9 mm, en particulier entre 1 mm et 1,2 mm.

6. Crampon selon l'une quelconque des revendications 1 à 5, **caractérisé en ce que** le diamètre (D_{T}) ou la longueur (L_{T}) et la largeur (B_{T}) de la partie centrale (3, 3') au niveau de la partie amincie (6, 6') mesurent 4 mm à 5,3 mm.

7. Crampon selon l'une quelconque des revendications 1 à 6, **caractérisé en ce qu'**une région de transition (2'a) à la partie supérieure (3'a) de la partie centrale (3') est réalisée au niveau de la bride supérieure (2'), laquelle région de transition (2'a) présente un contour extérieur arrondi sous forme convexe.

8. Crampon selon la revendication 7, **caractérisé en ce que** le contour extérieur arrondi sous forme convexe de la région de transition (2'a) suit essentiellement un ou plusieurs arcs de cercle dont le rayon (r₂') est compris entre 1 mm et 2,5 mm, en particulier entre 1,2 mm et 2 mm.

9. Crampon selon la revendication 7 ou 8, **caractérisé en ce que** la hauteur (h₂) de la région de transition (2'a) est comprise entre 15 % et 30 % de la hauteur (Ho) de la bride supérieure (2').

10. Pneumatique de véhicule comprenant une bande de roulement dans laquelle sont ancrés des crampons selon l'une quelconque ou plusieurs des revendications 1 à 9.
